# EUROPEAN PATENT APPLICATION

(11) **EP 2 037 664 A1**
(43) Date of publication of application: **18.03.2009**
(21) Application number: 07117993.1
(22) Date of filing: 05.10.2007
(51) Int. Cl.: H04M 11/04, G08B 25/01

(54) **Providing personal emergency data to a public safety answering point**

(30) Priority: 13.09.2007 US 854678
(71) Applicant: Research In Motion Limited, Waterloo, Ontario N2L 3W8 (CA)
(72) Inventor: Furbeck, David S, Keller TX 76248 (US)
(74) Representative: Rickard, David John

(57) **Abstract**

A method for providing personal emergency data (120) to a public safety answering point (PSAP) (130). The method includes storing a piece of personal data before an emergency occurs, retrieving the piece of personal data after the emergency occurs, and transmitting the piece of personal data to the PSAP (130).
The personal emergency data includes medical details such as prescription drugs and dosage, allergies, blood group as well as personal details. This personal emergency data can be sent directly from a telephone, wireless and/or mounted in a vehicle to the PSAP or may be stored in the PSTN and sent on demand to the PSAP.

## Description

Easily transportable devices with wireless telecommunications capabilities, such as mobile telephones, personal digital assistants, handheld computers, and similar devices, will be referred to herein as wireless devices. The term "wireless device" may refer to a device and its associated Universal Integrated Circuit Card (UICC) that includes a Subscriber Identity Module (SIM) application, a Universal Subscriber Identity Module (USIM) application, or a Removable User Identity Module (R-UIM) application or may refer to the device itself without such a card. Some vehicles are equipped with a telecommunications device that can automatically place an emergency call when the vehicle is involved in a collision. As used herein, the term "wireless device" may also refer to such a telecommunications device installed in a vehicle.

### GENERAL

In an embodiment, a method for providing personal emergency data to a PSAP may be provided. The method may include storing a piece of personal data before an emergency occurs, retrieving the piece of personal data after the emergency occurs, and transmitting the piece of personal data to the PSAP.

In another embodiment, a wireless device may be provided. The wireless device may include a memory component to store personal data for use in case of emergency and a transmission component configured to transmit at least some of the personal data to a PSAP associated with the occurrence of an emergency.

In another embodiment, a system may be provided. The system may include a memory component to store personal data for use in case of emergency and a transmission component configured to transmit at least some of the personal data to a PSAP associated with the occurrence of an emergency.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 is a block diagram of a telecommunications system according to an embodiment of the disclosure.

Figure 2 is a diagram of a method for providing personal emergency data to a PSAP according to an embodiment of the disclosure.

Figure 3 is a diagram of a wireless communications system including a wireless device operable for some of the various embodiments of the disclosure.

Figure 4 is a block diagram of a wireless device operable for some of the various embodiments of the disclosure.

Figure 5 is a diagram of a software environment that may be implemented on a wireless device operable for some of the various embodiments of the disclosure.

### DESCRIPTION OF PREFERRED EMBODIMENTS

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Emergency calls, such as 911 calls in the United States and 112 calls in Europe, are typically handled by a Public Safety Answering Point (PSAP), which can coordinate an appropriate response to the emergency. In some cases, an agency or system other than a PSAP, such as a private emergency response service, might receive emergency calls. Any entity that receives emergency calls will be referred to herein as a PSAP.

When a vehicle equipped with an onboard emergency calling system places an emergency call, a minimum set of data (MSD) related to the emergency might be automatically transmitted to a PSAP. For example, a vehicle might be equipped with sensors that can detect which portions of the vehicle have been impacted by a collision and which airbags in the vehicle have been deployed. If the vehicle is involved in a collision, an MSD might be automatically transmitted to a PSAP and might include data such as the vehicle identification number; which air bags were deployed; which portions of the vehicle were impacted; where the vehicle is currently located, as determined by, for example, an onboard global positioning system (GPS) device; and other information. The PSAP might be able to use the MSD to provide a faster or more appropriate response to the emergency.

In an embodiment, a set of data that can be referred to as a personal emergency data set (PED) can be created. A standalone wireless device or a wireless device installed in a vehicle can cause a PED to be transmitted to a PSAP either instead of or in addition to an MSD. While an MSD typically contains data related only to a vehicle and the vehicle's current circumstances, a PED can contain one or more pieces of personalized data related to a wireless device user or a person known to the wireless device user. The data included in a PED might include, but is not limited to, for example, prescriptions, dosages, allergies, blood type, sex, height, weight, age, or other personal data that the user might wish to make available to an emergency service. A PED might also include medical history information such as pre-existing conditions or other information relevant to medical personnel such as instructions for treating specific medical conditions. Other information that might be provided includes organ donation information, requests or rejections of certain medical services or procedures, and so on.

The data in an MSD is typically generated at the time an emergency or other incident occurs. For example, data related to a vehicle collision would be generated at the time of the collision. The data in a PED, on the other hand, can be specified prior to an emergency and stored for later use. The PED can then be available to be sent to the PSAP when an emergency occurs.

In an embodiment, when a wireless device user dials a PSAP's telephone number, the wireless device can send a PED to the PSAP or the user can be given the option to send one or more PEDs to the PSAP. For example, when a user in the United States dials 911 on a wireless device, the PED for that user might automatically be sent to the PSAP without any further actions by the user. Alternatively, when the user dials 911, an interface might appear on the wireless device asking if the user wishes to send his or her PED and the PED might be sent to the PSAP upon the user providing an affirmative response. In another alternative, a plurality of PEDs might be available for a user to send to the PSAP. For example, a user might create separate PEDs for himself, his wife, and each of his children. If an emergency occurred involving one of the children, for example, the user might wish to send the PED for that child to the PSAP. To handle such a situation, when the user dials 911 on the wireless device, the wireless device might display an interface listing the names or other identifiers of the individuals whose PEDs the user had previously created. The user might then use the interface to select the individual or individuals whose PEDs the user wishes to transmit to the PSAP, and the appropriate PED or PEDs might then be sent to the PSAP.

In another alternative, rather than the transmission of the PED being initiated by the user dialing the number of the PSAP, a wireless device might be equipped with a dedicated button or other input mechanism that can be activated to send the PED. For example, a handset might have a button that can be pushed or a menu item or icon that can be selected when an emergency occurs. Activating such an input mechanism might automatically send the handset user's PED to the PSAP. Alternatively, activating the input mechanism might cause an interface to appear on the handset that allows the user to choose to transmit his or her PED and/or the PEDs of one or more other individuals to the PSAP.

In the case where the wireless device is installed in a vehicle, the input mechanism might be a button or other component in the control panel or elsewhere in the vehicle. Activating the input mechanism might automatically send a PED to the PSAP or might give the user an opportunity to select one or more PEDs to send to the PSAP. In an alternative of the case where the wireless devices is installed in a vehicle, the PED of the usual driver of the vehicle or of another pre-specified individual might automatically be sent to the PSAP when sensors in the vehicle detect that the vehicle has been involved in a collision or other emergency with a severity above a specified threshold. When the PED is transmitted by a wireless device in a vehicle, the PED might be sent in the same message as an MSD, might be sent in a separate message from the MSD, or might be sent instead of the MSD.

Several transport mechanisms currently exist for transmitting MSDs to a PSAP. For example, the cellular text telephone modem (CTM) system uses a series of tones to transmit emergency data in a voice call. Other voice-based transport mechanisms will be familiar to one of skill in the art. In an embodiment, PEDs are transmitted using one of the known voice-based transport mechanisms such as CTM. When an existing transport mechanism is used to send a PED, little or no modification may be needed on the part of the PSAP in order to receive and properly interpret the PED. However, transmission of the PED by a wireless device might be limited to the use of technologies, such as voice band modems, that are compatible with existing PSAP technologies. No modifications may be needed to a wireless device in a vehicle that is already capable of transmitting MSDs via CTM or a similar transport mechanism in order for such a wireless device to transmit PEDs. A standalone wireless device such as a handset, on the other hand, might need to be modified to be capable of transmitting PEDs via CTM or a similar transport mechanism.

In an alternative embodiment, a transport mechanism other than a voice-based transport mechanism such as CTM might be used by a wireless device to transmit a PED. For example, a PED could be transmitted in a voice over Internet Protocol (VoIP) phone call or in a data transmission via WiFi, WiMax, or some other digital data transmission system. Transmission by such technologies might allow faster transmission of a PED or might allow a PED to contain more information compared to voice-based systems such as CTM. However, the use of such technologies might entail modifications in the PSAP in order for the PSAP to receive and properly interpret the PED.

In an embodiment, one or more PEDs might be stored in a memory location within a wireless device and might be retrieved from the memory location and sent from the wireless device to the PSAP in one of the scenarios described above. In an alternative embodiment, one or more PEDs might be stored in a computer or a similar device that is accessible to the wireless device via a telecommunications network. For example, a server computer maintained by a telecommunications services provider or by an emergency services provider might retain the PEDs generated by the customers of the provider. When a customer wishes to send a PED to a PSAP, or when a PED is to be automatically sent to a PSAP, the customer's wireless device might send a message to the server computer indicating the PED that is to be sent. The server computer might then send the specified PED to the PSAP. Alternatively, the server computer might return the appropriate PED to the wireless device and the wireless device might send the PED to the PSAP.

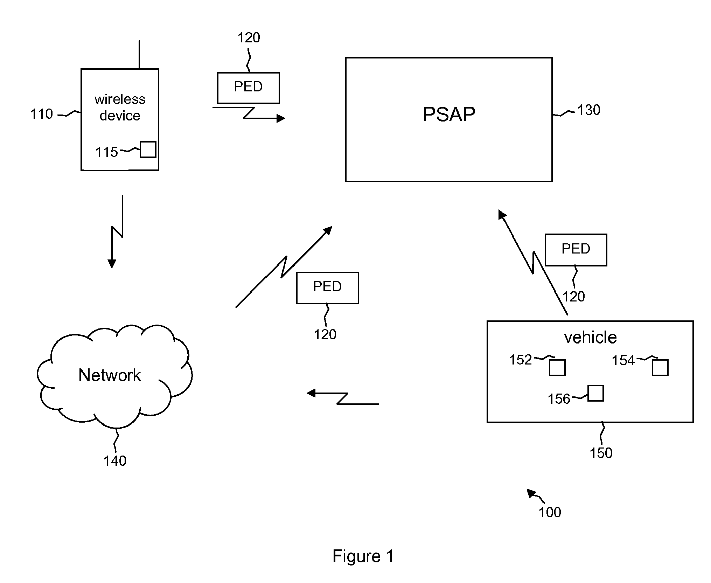

Figure 1 is a block diagram of an embodiment of a system 100 that includes a wireless device 110 capable of causing a PED 120 to be sent to a PSAP 130. The wireless device 110 might be a standalone device such as a mobile telephone, a personal digital assistant, a handheld computer, or a similar device. Alternatively, a telecommunications device similar to the wireless device 110 might be installed in a vehicle 150. In an embodiment, the PED 120 is stored in the wireless device 110. When an emergency occurs, the wireless device 110 can send the PED 120 to the PSAP 130. For example, when the user of the wireless device 110 dials 911, the user's PED 120 might automatically be sent from the wireless device 110 to the PSAP 130. Alternatively, when the user dials 911, an interface might appear on the wireless device 110 that allows the user to send his or her PED 120 and/or the PEDs 120 of one or more other individuals from the wireless device 110 to the PSAP 130.

Alternatively, the wireless device 110 might include an input mechanism 115 that, upon activation, causes the user's PED 120 to be sent to the PSAP 130. In another alternative, activating the input mechanism 115 might cause an interface to appear on the wireless device 110 that allows the user to send his or her PED 120 and/or the PEDs 120 of one or more other individuals from the wireless device 110 to the PSAP 130. In an embodiment, activating the input mechanism 115 might cause the wireless device 110 to automatically dial 911 or another number for the PSAP 130 so that the user can establish a voice connection with the PSAP 130.

In the case where the wireless device 110 is installed in the vehicle 150, one or more PEDs 120 might automatically be sent from the wireless device 110 to the PSAP 130 when the vehicle 150 is involved in a collision or other emergency with a severity above a specified threshold. In one embodiment, the PED 120 of the usual driver of the vehicle 150 is transmitted. In another embodiment, the vehicle owner or operator might specify one or more PEDs 120 that are to be transmitted in case of an emergency. In yet another embodiment, the PED 120 that is transmitted might be based on a customizable feature of the vehicle150. For example, some vehicles 150 are equipped with features, such as seat, steering wheel, and mirror positions, that can be automatically adjusted to the preferences of different drivers. Different PEDS 120 might be associated with different sets of such customizable features so that the PED 120 of the driver whose preferences are currently in effect is transmitted in case of a collision or other emergency with a severity above a specified threshold.

In another case where the wireless device 110 is installed in the vehicle 150, an MSD and/or at least a portion of one or more PEDs 120 might be stored in a memory component 152 in the vehicle 150. In the event of an emergency, at least a portion of the data in the memory component 152 can be transmitted from a transmission component 154 in the vehicle 150 to a standalone wireless device 110. A processor 156 on in the vehicle may be configured for communicating with the memory component 152 to promote transmission of the data via the transmission component 154. The transmission from the transmission component 154 to the standalone wireless device 110 might be made via a Bluetooth transmission or some other short-range communication link. The standalone wireless device 110 might then combine the data received from the vehicle 150 with at least a portion of one or more PEDs 120 stored internally in the standalone wireless device 110 and might then transmit the combined data to the PSAP 130. Alternatively, no PEDs might be stored in the standalone wireless device 110 and only the data received from the vehicle 150 might be transmitted to the PSAP 130.

In alternatives to the scenarios just described, the PED 120 is not stored in the wireless device 110 or in the memory component 152 in the vehicle 150 but is stored instead in a component of a network 140 that is wirelessly accessible to the wireless device 110. In some of these alternative embodiments, when the PED 120 is to be sent to the PSAP 130, the wireless device 110 or the vehicle 150 sends a message to the network 140 indicating which PED 120 or PEDs 120 are to be sent. The network 140 then retrieves the appropriate PED 120 or PEDs 120 and transmits the PED 120 or PEDs 120 to the PSAP 130. Alternatively, the network 140 might return the PED 120 or PEDs 120 to the wireless device 110 or to the vehicle 150 and the wireless device 110 or the transmission component 154 in the vehicle 150 might transmit the PED 120 or PEDs 120 to the PSAP 130.

Storage of the PEDs 120 on the network 140 in this manner might eliminate the need for a user to generate multiple PEDs 120 for multiple wireless devices 110. For example, a user might wish to be able to transmit his or her PED 120 from either a handset or a vehicle equipped with a telecommunications device. The user might need to generate the PED 120 separately for each of these wireless devices 110 if the PED 120 is to be stored internally in each of the wireless devices 110. On the other hand, a network storage capability might allow the user to generate the PED 120 only once and store the PED 120 on the network 140 for future access by either the handset or the vehicle.

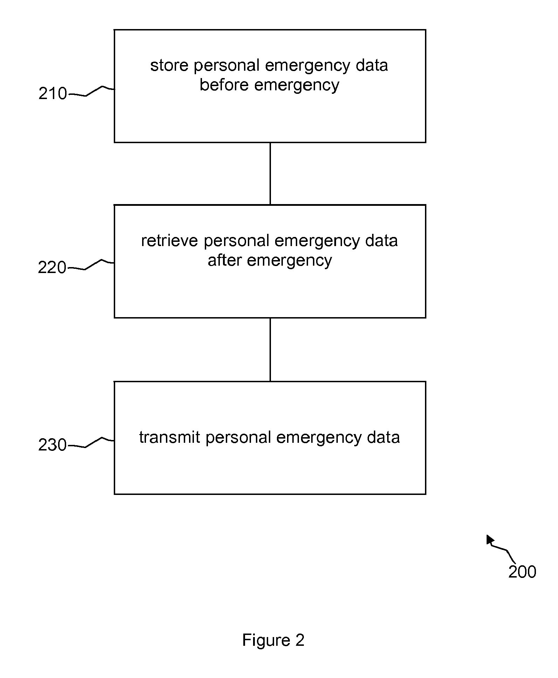

Figure 2 illustrates an embodiment of a method 200 for providing personal emergency data to a PSAP. In block 210, a piece of personal emergency data is stored before an emergency occurs. The data might be a prescription, a dosage, an allergy, a blood type, the sex, height, weight, or age of an individual, or other personal data that the individual might wish to make available to the PSAP. The PED might also include information on pre-existing medical conditions or actions requested from medical personnel. The data might be stored in a wireless device or on a component of a network accessible to a wireless device. In block 220, the piece of personal emergency data is retrieved from the wireless device or from the network when an emergency occurs. In block 230, the piece of personal emergency data is transmitted to the PSAP.

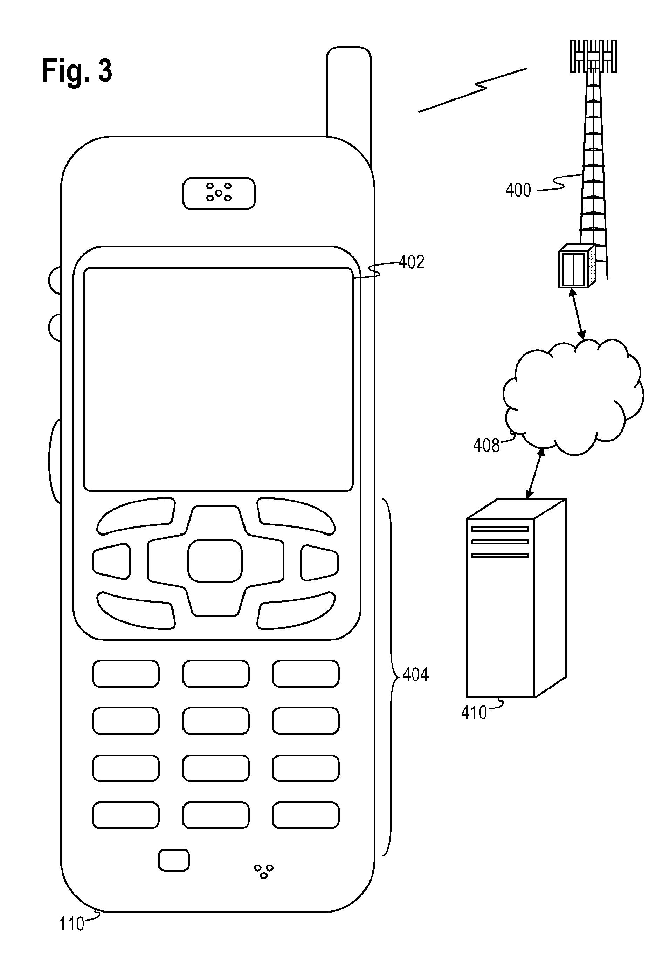

Figure 3 illustrates a wireless communications system including an embodiment of the wireless device 110. The wireless device 110 is operable for implementing aspects of the disclosure, but the disclosure should not be limited to these implementations. Though illustrated as a mobile phone, the wireless device 110 may take various forms including a wireless handset, a pager, a personal digital assistant (PDA), a portable computer, a tablet computer, or a laptop computer. Many suitable devices combine some or all of these functions. In some embodiments of the disclosure, the wireless device 110 is not a general purpose computing device like a portable, laptop or tablet computer, but rather is a special-purpose communications device such as a mobile phone, a wireless handset, a pager, a PDA, or a telecommunications device installed in a vehicle. In another embodiment, the wireless device 110 may be a portable, laptop or other computing device. The wireless device 110 may support specialized activities such as gaming, inventory control, job control, and/or task management functions, and so on.

The wireless device 110 includes a display 402. The wireless device 110 also includes a touch-sensitive surface, a keyboard or other input keys generally referred as 404 for input by a user. The keyboard may be a full or reduced alphanumeric keyboard such as QWERTY, Dvorak, AZERTY, and sequential types, or a traditional numeric keypad with alphabet letters associated with a telephone keypad. The input keys may include a trackwheel, an exit or escape key, a trackball, and other navigational or functional keys, which may be inwardly depressed to provide further input function. The wireless device 110 may present options for the user to select, controls for the user to actuate, and/or cursors or other indicators for the user to direct. The input mechanism 115 of Figure 1 might be included in the keyboard or other input keys 404.

The wireless device 110 may further accept data entry from the user, including numbers to dial or various parameter values for configuring the operation of the wireless device 110. The wireless device 110 may further execute one or more software or firmware applications in response to user commands. These applications may configure the wireless device 110 to perform various customized functions in response to user interaction. Additionally, the wireless device 110 may be programmed and/or configured over-the-air, for example from a wireless base station, a wireless access point, or a peer wireless device 110.

Among the various applications executable by the wireless device 110 are a web browser, which enables the display 402 to show a web page. The web page may be obtained via wireless communications with a wireless network access node, a cell tower, a peer wireless device 110, or any other wireless communication network or system 400. The network 400 may be similar to the network 140 of Figure 1. The network 400 is coupled to a wired network 408, such as the Internet. Via the wireless link and the wired network, the wireless device 110 has access to information on various servers, such as a server 410. The server 410 may provide content that may be shown on the display 402. Alternately, the wireless device 110 may access the network 400 through a peer wireless device 110 acting as an intermediary, in a relay type or hop type of connection.

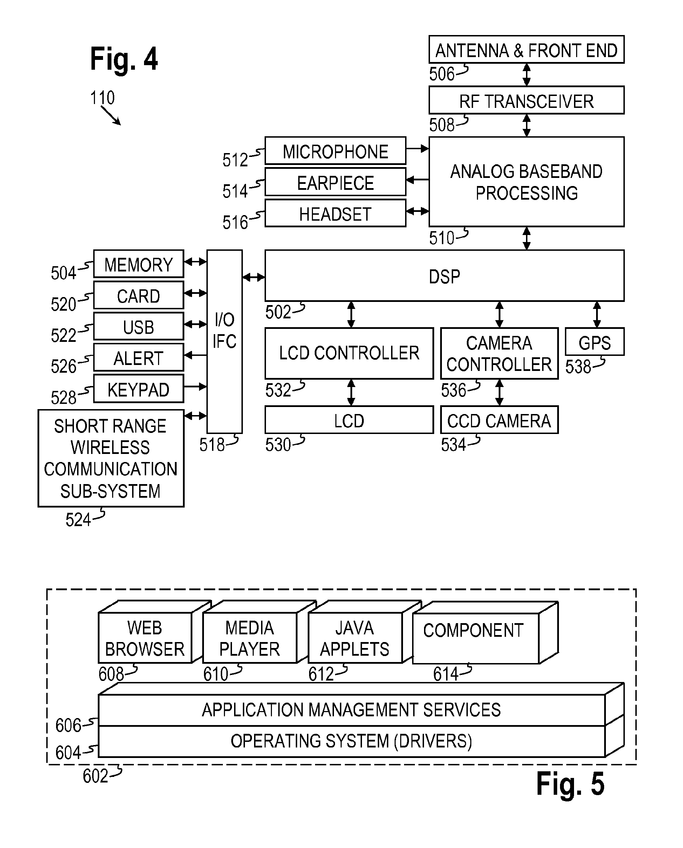

Figure 4 shows a block diagram of the wireless device 110. While a variety of known components of wireless devices 110 are depicted, in an embodiment a subset of the listed components and/or additional components not listed may be included in the wireless device 110. The wireless device 110 includes a digital signal processor (DSP) 502 and a memory 504. As shown, the wireless device 110 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, a short range wireless communication sub-system 524, an alert 526, a keypad 528, a liquid crystal display (LCD), which may include a touch sensitive surface 530, an LCD controller 532, a charge-coupled device (CCD) camera 534, a camera controller 536, and a global positioning system (GPS) sensor 538. In an embodiment, the wireless device 110 may include another kind of display that does not provide a touch sensitive screen. In an embodiment, the DSP 502 may communicate directly with the memory 504 without passing through the input/output interface 518.

The DSP 502 or some other form of controller or central processing unit operates to control the various components of the wireless device 110 in accordance with embedded software or firmware stored in memory 504 or stored in memory contained within the DSP 502 itself. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna and front end unit 506 may be provided to convert between wireless signals and electrical signals, enabling the wireless device 110 to send and receive information from a cellular network or some other available wireless communications network or from a peer wireless device 110. In an embodiment, the antenna and front end unit 506 may include multiple antennas to support beam forming and/or multiple input multiple output (MIMO) operations. As is known to those skilled in the art, MIMO operations may provide spatial diversity which can be used to overcome difficult channel conditions and/or increase channel throughput. The antenna and front end unit 506 may include antenna tuning and/or impedance matching components, RF power amplifiers, and/or low noise amplifiers.

The RF transceiver 508 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 510 and/or the DSP 502 or other central processing unit. In some embodiments, the RF Transceiver 508, portions of the Antenna and Front End 506, and the analog baseband processing unit 510 may be combined in one or more processing units and/or application specific integrated circuits (ASICs).

The analog baseband processing unit 510 may provide various analog processing of inputs and outputs, for example analog processing of inputs from the microphone 512 and the headset 516 and outputs to the earpiece 514 and the headset 516. To that end, the analog baseband processing unit 510 may have ports for connecting to the built-in microphone 512 and the earpiece speaker 514 that enable the wireless device 110 to be used as a cell phone. The analog baseband processing unit 510 may further include a port for connecting to a headset or other hands-free microphone and speaker configuration. The analog baseband processing unit 510 may provide digital-to-analog conversion in one signal direction and analog-to-digital conversion in the opposing signal direction. In some embodiments, at least some of the functionality of the analog baseband processing unit 510 may be provided by digital processing components, for example by the DSP 502 or by other central processing units.

The DSP 502 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 502 may perform modulation, coding, interleaving, and spreading, and for a receiver function the DSP 502 may perform despreading, deinterleaving, decoding, and demodulation. In another embodiment, for example in an orthogonal frequency division multiplex access (OFDMA) technology application, for the transmitter function the DSP 502 may perform modulation, coding, interleaving, inverse fast Fourier transforming, and cyclic prefix appending, and for a receiver function the DSP 502 may perform cyclic prefix removal, fast Fourier transforming, deinterleaving, decoding, and demodulation. In other wireless technology applications, yet other signal processing functions and combinations of signal processing functions may be performed by the DSP 502.

The DSP 502 may communicate with a wireless network via the analog baseband processing unit 510. In some embodiments, the communication may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the short range wireless communication sub-system 524. The USB interface 522 may be used to charge the wireless device 110 and may also enable the wireless device 110 to function as a peripheral device to exchange information with a personal computer or other computer system. The short range wireless communication sub-system 524 may include an infrared port, a Bluetooth interface, an IEEE 802.11 compliant wireless interface, or any other short range wireless communication sub-system, which may enable the wireless device 110 to communicate wirelessly with other nearby mobile devices and/or wireless base stations.

The input/output interface 518 may further connect the DSP 502 to the alert 526 that, when triggered, causes the wireless device 110 to provide a notice to the user, for example, by ringing, playing a melody, or vibrating. The alert 526 may serve as a mechanism for alerting the user to any of various events such as an incoming call, a new text message, and an appointment reminder by silently vibrating, or by playing a specific pre-assigned melody for a particular caller.

The keypad 528 couples to the DSP 502 via the interface 518 to provide one mechanism for the user to make selections, enter information, and otherwise provide input to the wireless device 110. The keyboard 528 may be a full or reduced alphanumeric keyboard such as QWERTY, Dvorak, AZERTY and sequential types, or a traditional numeric keypad with alphabet letters associated with a telephone keypad. The input keys may include a trackwheel, an exit or escape key, a trackball, and other navigational or functional keys, which may be inwardly depressed to provide further input function. Another input mechanism may be the LCD 530, which may include touch screen capability and also display text and/or graphics to the user. The LCD controller 532 couples the DSP 502 to the LCD 530.

The CCD camera 534, if equipped, enables the wireless device 110 to take digital pictures. The DSP 502 communicates with the CCD camera 534 via the camera controller 536. In another embodiment, a camera operating according to a technology other than Charge Coupled Device cameras may be employed. The GPS sensor 538 is coupled to the DSP 502 to decode global positioning system signals, thereby enabling the wireless device 110 to determine its position. Various other peripherals may also be included to provide additional functions, e.g., radio and television reception.

Figure 5 illustrates a software environment 602 that may be implemented by the DSP 502. The DSP 502 executes operating system drivers 604 that provide a platform from which the rest of the software operates. The operating system drivers 604 provide drivers for the wireless device hardware with standardized interfaces that are accessible to application software. The operating system drivers 604 include application management services ("AMS") 606 that transfer control between applications running on the wireless device 110. Also shown in Figure 5 are a web browser application 608, a media player application 610, and Java applets 612. The web browser application 608 configures the wireless device 110 to operate as a web browser, allowing a user to enter information into forms and select links to retrieve and view web pages. The media player application 610 configures the wireless device 110 to retrieve and play audio or audiovisual media. The Java applets 612 configure the wireless device 110 to provide games, utilities, and other functionality. A component 614 might provide functionality related to storage and/or transmission of personal emergency data.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method of using a wireless device to provide personalized data relating to or associated with a pre-specified person to a public safety answering point `PSAP' comprising:
storing in the device a piece of personal data relating to the pre-specified person before an event occurs;
retrieving the piece of personal data after the event occurs; and
transmitting the piece of personal data to the PSAP.

2. The method of claim 1, wherein the piece of personal data is at least one of:
a pre-existing medical condition;
a requested action from medical personnel;
a prescription;
a dosage;
an allergy;
a blood type;
a sex;
a height;
a weight; and
an age.

3. The method of claim 1 or claim 2, further comprising:
communicating the personal data to the PSAP by:
transmitting the piece of personal data to the PSAP automatically when a telephone number for the PSAP is dialed, or
activating an input mechanism on the wireless device, the activation of the input mechanism causing the piece of personal data to be transmitted to the PSAP.

4. The method of claim 1 or claim 2, further comprising:
associating a plurality of pieces of personal data with a plurality of pre-specified persons; and
providing an opportunity to select at least one of the pre-specified persons whose associated piece of personal data is to be transmitted to the PSAP.

5. The method of claim 1 or claim 2, further comprising:
associating the pre-specified person with a wireless device installed in a vehicle; and
automatically transmitting the piece of personal data to the PSAP when the vehicle is involved in an emergency event with a severity above a specified threshold.

6. The method of claim 1 or claim 2, further comprising:
associating a plurality of pieces of personal data with a plurality of pre-specified persons;
associating the plurality of pre-specified persons with a wireless device installed in a vehicle; and,
when the vehicle is involved in an emergency event with a severity above a specified threshold, automatically transmitting to the PSAP the piece of personal data of at least one of the pre-specified persons.

7. The method of claim 6, further comprising specifying the one of the pre-specified persons whose piece of personal data is to be transmitted to the PSAP in case of an emergency event by associating the pre-specified person with a customizable feature of the vehicle.

8. The method of any one of claims 5 to 7, further comprising transmitting the piece of personal data to the PSAP in a data transmission associated with the transmission of a minimum set of non-personalized data that the wireless device automatically transmits to the PSAP when the vehicle is involved in an emergency event.

9. The method of any one of the preceding claims, further comprising:
storing the piece or pieces of personal data on a component of a network; and
using the wireless device to direct the component of the network to transmit the piece or pieces of personal data to the PSAP.

10. A wireless device, comprising:
a memory component configured to store computer readable instructions; and
a processor configured to execute said computer readable instructions to cause said wireless device to perform the steps of the method of any one of claims 1 to 9.

11. A computer readable medium storing computer readable instructions executable by a processor of a computing device to cause said device to implement the steps of the method of any one of claims 1 to 9.

12. A system, comprising:
a memory component to store personal data relating to one or more pre-specified persons for use in case of an emergency event; and
a transmission component configured to transmit at least some of the personal data to a public safety answering point `PSAP' associated with the occurrence of an emergency event.

13. The system of claim 12, wherein the memory component is a component of a network and wherein the transmission component is installed on a vehicle.

14. The system of claim 12, wherein the memory component is a component of a handheld mobile device or a vehicle and wherein the transmission component is installed on the vehicle.

15. The system of claim 12, wherein a wireless device installed in a vehicle promotes transmission of at least some of the personal data to the PSAP directly via the wireless device installed in the vehicle or via a handheld mobile device when the vehicle is involved in an emergency event with a severity above a specified threshold.

## Amended claims

### Amended claims in accordance with Rule 137(2) EPC.

1. A method (200) of using a wireless device (110) to provide personalized data relating to or associated with a pre-specified person to a public safety answering point 'PSAP' (130) comprising:
storing (210) in the device (110) a piece of personal data (120) relating to the pre-specified person before an emergency event occurs;
retrieving (220) the piece of personal data (120) after the emergency event occurs; and
the device (110) transmitting (230) the piece of personal data (120) to the PSAP (130).

2. The method of claim 1, wherein the piece of personal data (120) is at least one of:
a pre-existing medical condition;
a requested action from medical personnel;
a prescription;
a dosage;
an allergy;
a blood type;
a sex;
a height;
a weight; and
an age.

3. The method of claim 1 or claim 2, further comprising:
communicating the personal data to the PSAP (130) by:
transmitting the piece of personal data (120) to the PSAP (130) automatically when a telephone number for the PSAP (130) is dialed, or
activating an input mechanism (115) on the wireless device (110), the activation of the input mechanism causing the piece of personal data (120) to be transmitted to the PSAP (130).

4. The method of claim 1 or claim 2, further comprising:
associating a plurality of pieces of personal data (120) with a plurality of pre-specified persons; and
providing an opportunity to select at least one of the pre-specified persons whose associated piece of personal data (120) is to be transmitted to the PSAP (130).

5. The method of claim 1 or claim 2, further comprising:
associating the pre-specified person with a wireless device (110) installed in a vehicle (150); and
automatically transmitting the piece of personal data (120) to the PSAP (130) when the vehicle (150) is involved in an emergency event with a severity above a specified threshold.

6. The method of claim 1 or claim 2, further comprising:
associating a plurality of pieces of personal data (120) with a plurality of pre-specified persons;
associating the plurality of pre-specified persons with a wireless device (110) installed in a vehicle (150); and,
when the vehicle (150) is involved in an emergency event with a severity above a specified threshold, automatically transmitting to the PSAP (130) the piece of personal data (120) of at least one of the pre-specified persons.

7. The method of claim 6, further comprising specifying the one of the pre-specified persons whose piece of personal data (120) is to be transmitted to the PSAP (130) in case of an emergency event by associating the pre-specified person with a customizable feature of the vehicle (150).

8. The method of any one of claims 5 to 7, further comprising transmitting the piece of personal data (120) to the PSAP (130) in a data transmission associated with the transmission of a minimum set of non-personalized data that the wireless device (110) automatically transmits to the PSAP (130) when the vehicle (150) is involved in an emergency event.

9. The method of any one of the preceding claims, further comprising:
instead of the device (110) transmitting the piece of personal data (120) to the PSAP (130), storing the piece or pieces of personal data (120) on a component of a network (140); and
the wireless device directing the component of the network (140) to transmit the piece or pieces of personal data to the PSAP (130).

10. A wireless device (110), comprising:
a memory component (504) storing computer readable instructions; and
a processor (502) configured to execute said computer readable instructions to cause said wireless device (110) to perform the steps of the method of any one of claims 1 to 9.

11. A computer readable medium storing computer readable instructions executable by a processor (502) of a computing device (110) to cause said device (110) to implement the steps of the method of any one of claims 1 to 9.

12. A system (100), comprising:
a memory component (152, 140) to store personal data (120) relating to one or more pre-specified persons for use in case of an emergency event;
a transmission component (154, 140) configured to transmit at least some of the personal data (120) to a public safety answering point 'PSAP' (130) associated with the occurrence of an emergency event; and
a wireless component (110, 150) configured to direct the transmission component (154, 140) to transmit the at least some of the personal data (120) to the PSAP (130) after the occurrence of the emergency event.

13. The system of claim 12, wherein the memory component is a component of a network (140) and wherein the transmission component (154) is installed on a vehicle (150).

14. The system of claim 12, wherein the memory component (152, 504) is a component of a handheld mobile device (110) or a vehicle (150) and wherein the transmission component (154) is installed on the vehicle (150).

15. The system of claim 12, wherein a wireless device installed in a vehicle (150) promotes transmission of at least some of the personal data (120) to the PSAP (130) directly via the wireless device installed in the vehicle (150) or via a handheld mobile device (110) when the vehicle (150) is involved in an emergency event with a severity above a specified threshold.

## Amended claims

### Amended claims in accordance with Rule 137(2) EPC.

**1.** A method (200) of using a wireless device (110) to provide personalized data relating to or associated with a pre-specified person to a public safety answering point 'PSAP' (130) comprising:
storing (210) in the device (110) a piece of personal data (120) relating to the pre-specified person before an emergency event occurs;
retrieving (220) the piece of personal data (120) after the emergency event occurs; and
the device (110) transmitting (230) the piece of personal data (120) to the PSAP (130).

**2.** The method of claim 1, wherein the piece of personal data (120) is at least one of:
a pre-existing medical condition;
a requested action from medical personnel;
a prescription;
a dosage;
an allergy;
a blood type;
a sex;
a height;
a weight; and
an age.

**3.** The method of claim 1 or claim 2, further comprising:
communicating the personal data to the PSAP (130) by:
transmitting the piece of personal data (120) to the PSAP (130) automatically when a telephone number for the PSAP (130) is dialed, or
activating an input mechanism (115) on the wireless device (110), the activation of the input mechanism causing the piece of personal data (120) to be transmitted to the PSAP (130).

**4.** The method of claim 1 or claim 2, further comprising:
associating a plurality of pieces of personal data (120) with a plurality of pre-specified persons; and
providing an opportunity to select at least one of the pre-specified persons whose associated piece of personal data (120) is to be transmitted to the PSAP (130).

**5.** The method of claim 1 or claim 2, further comprising:
associating the pre-specified person with a wireless device (110) installed in a vehicle (150); and
automatically transmitting the piece of personal data (120) to the PSAP (130) when the vehicle (150) is involved in an emergency event with a severity above a specified threshold.

**6.** The method of claim 1 or claim 2, further comprising:
associating a plurality of pieces of personal data (120) with a plurality of pre-specified persons;
associating the plurality of pre-specified persons with a wireless device (110) installed in a vehicle (150); and,
when the vehicle (150) is involved in an emergency event with a severity above a specified threshold, automatically transmitting to the PSAP (130) the piece of personal data (120) of at least one of the pre-specified persons.

**7.** The method of claim 6, further comprising specifying the one of the pre-specified persons whose piece of personal data (120) is to be transmitted to the PSAP (130) in case of an emergency event by associating the pre-specified person with a customizable feature of the vehicle (150).

**8.** The method of any one of claims 5 to 7, further comprising transmitting the piece of personal data (120) to the PSAP (130) in a data transmission associated with the transmission of a minimum set of non-personalized data that the wireless device (110) automatically transmits to the PSAP (130) when the vehicle (150) is involved in an emergency event.

**9.** The method of any one of the preceding claims, further comprising:
instead of the device (110) transmitting the piece of personal data (120) to the PSAP (130), storing the piece or pieces of personal data (120) on a component of a network (140); and
the wireless device directing the component of the network (140) to transmit the piece or pieces of personal data to the PSAP (130).

**10.** A wireless device (110), comprising:
a memory component (504) storing computer readable instructions; and
a processor (502) configured to execute said computer readable instructions to cause said wireless device (110) to perform the steps of the method of any one of claims 1 to 9.

**11.** A computer readable medium storing computer readable instructions executable by a processor (502) of a computing device (110) to cause said device (110) to implement the steps of the method of any one of claims 1 to 9.

**12.** A system (100), comprising:
a memory component (152, 140) to store personal data (120) relating to one or more pre-specified persons for use in case of an emergency event;
a transmission component (154, 140) configured to transmit at least some of the personal data (120) to a public safety answering point 'PSAP' (130) associated with the occurrence of an emergency event; and
a wireless component (110, 150) configured to direct the transmission component (154, 140) to transmit the at least some of the personal data (120) to the PSAP (130) after the occurrence of the emergency event.

**13.** The system of claim 12, wherein the memory component is a component of a network (140) and wherein the transmission component (154) is installed on a vehicle (150).

**14.** The system of claim 12, wherein the memory component (152, 504) is a component of a handheld mobile device (110) or a vehicle (150) and wherein the transmission component (154) is installed on the vehicle (150).

**15.** The system of claim 12, wherein a wireless device installed in a vehicle (150) promotes transmission of at least some of the personal data (120) to the PSAP (130) directly via the wireless device installed in the vehicle (150) or via a handheld mobile device (110) when the vehicle (150) is involved in an emergency event with a severity above a specified threshold.
